# EUROPEAN PATENT APPLICATION

(11) **EP 4 797 057 A2**
(43) Date of publication of application: **26.08.2026**
(21) Application number: 26189256.6
(22) Date of filing: 01.07.2026
(51) Int. Cl.: G06F 3/01, G06F 3/14, B60K 35/81

(54) **METHOD AND APPARATUS FOR CONTROLLING DISPLAY DEVICE, AND ELECTRONIC DEVICE**

(30) Priority: 14.08.2025 CN 202511141228
(71) Applicant: XG TECH PTE. LTD., Singapore 179098 (SG)
(72) Inventor: HUANG, Jingchang, 179098 Singapore (SG); DENG, Hou, 179098 Singapore (SG)
(74) Representative: Casalonga

(57) **Abstract**

Embodiments of the present disclosure relate to the technical field of vehicles, and provide a method and an apparatus for controlling a display device, and an electronic device. The method includes: determining a first position where the display device is located; obtaining a target image containing a target user, and determining a gaze direction of the target user based on the target image; determining a gaze coverage status corresponding to the display device based on a spatial relationship between the gaze direction of the target user and the first position where the display device is located; and adjusting a display parameter of the display device based on a change in the gaze coverage status.

## Description

### TECHNICAL FIELD

The present disclosure relates to the technical field of vehicles, and in particular, to a method and an apparatus for controlling a display device, and an electronic device.

### BACKGROUND

Currently, a display device is typically disposed in a vehicle, being capable of playing content such as navigation information and entertainment content. To ensure a display effect of the display device, an in-vehicle chip needs to devote substantial computational resources to operations such as rendering a high-resolution image, processing a complex graphic effect, or performing high-bitrate video decoding.

### SUMMARY

A current display device needs to occupy a large amount of computational power of a chip to ensure a display effect. However, in an actual driving scenario, a driver and a passenger do not continuously gaze at the display device at many moments. In this case, the display device still occupies a large amount of computational power. Specifically, the display device still occupies a large amount of computational power of a GPU, an NPU, and a CPU used for display content generation and display effect enhancement, resulting in a waste of computational resources of the chip.

To resolve the foregoing technical problem, embodiments of the present disclosure provide a method and an apparatus for controlling a display device, and an electronic device, which can adjust parameters of the display device based on a gaze direction of a user, thereby reducing computational resource consumption of a chip without affecting user viewing.

According to a first aspect of the present disclosure, a method for controlling a display device is provided. The method includes: determining a first position where the display device is located; obtaining a target image containing a target user, and determining a gaze direction of the target user based on the target image; determining a gaze coverage status corresponding to the display device based on a spatial relationship between the gaze direction of the target user and the first position where the display device is located; and adjusting a display parameter of the display device based on a change in the gaze coverage status.

According to a second aspect of the present disclosure, an apparatus for controlling a display device is provided. The apparatus includes: a signal acquisition component, including a camera, where the camera is configured to obtain a target image containing a target user; and one or more processors, configured to: when running instructions stored in a memory, determine a first position where the display device is located; determine a gaze direction of the target user based on the target image; determine a gaze coverage status corresponding to the display device based on a spatial relationship between the gaze direction of the target user and the first position where the display device is located; and adjust a display parameter of the display device based on a change in the gaze coverage status.

According to a third aspect of the present disclosure, an embodiment of the present disclosure provides a computer-readable storage medium. The storage medium stores a computer program, and the computer program is used for implementing the method for controlling a display device provided in the first aspect.

According to a fourth aspect of the present disclosure, an embodiment of the present disclosure provides an electronic device. The electronic device includes: a processor; and a memory, configured to store instructions executable by the processor. The processor is configured to read the executable instructions from the memory, and execute the executable instructions to implement the method for controlling a display device provided in the first aspect.

According to the method for controlling a display device provided in the present disclosure, the target image containing the target user can be collected, and the gaze direction of the target user can be determined based on the target image. Thereafter, determining the gaze coverage status based on the gaze direction is specifically determining, based on the spatial relationship between the gaze direction of the target user and the first position where the display device is located, whether a gaze of the target user covers the display device, or a size of a region that is of the display device and is covered by the gaze of the target user. In this way, the display parameter of the display device can be adjusted based on the change in the gaze coverage status. For example, when the display device changes from being uncovered by the gaze to being covered by the gaze, or changes from being partially covered by the gaze to being mostly covered by the gaze, it may be considered that the target user pays more attention to the display device. Therefore, the display parameter of the display device may be increased to improve the display effect of the display device. Conversely, when the display device changes from being covered by the gaze to being uncovered by the gaze, or changes from being mostly covered by the gaze to being partially covered by the gaze, it may be considered that the target user shifts the attention away from the display device. Therefore, the display parameter of the display device may be decreased to reduce the computational resource consumption of the chip. By means of dynamically adjusting the display parameter based on the gaze coverage status, the waste of the computational resources of the chip can be avoided while ensuring viewing experience of the user.

### BRIEF DESCRIPTION OF THE DRAWINGS

By describing embodiments of the present disclosure more detailed with reference to accompanying drawings, the foregoing and other objectives, features, and advantages of the present disclosure will become more apparent. The accompanying drawings are used to provide further understanding of the embodiments of the present disclosure, and constitute a part of the specification. Together with the embodiments of the present disclosure, the accompanying drawings are used to explain the present disclosure, and do not constitute a limitation on the present disclosure. In the accompanying drawings, same reference numerals generally represent same components or steps.
FIG. 1 is a block diagram of a structure of a system for controlling a display device according to an exemplary embodiment of the present disclosure;
FIG. 2 is a schematic diagram of a mounting position of a display device according to an exemplary embodiment of the present disclosure;
FIG. 3 is a schematic flowchart of a method for controlling a display device according to an exemplary embodiment of the present disclosure;
FIG. 4 is a schematic flowchart of a method for controlling a display device according to another exemplary embodiment of the present disclosure;
FIG. 5 is a schematic diagram of a target vector range according to an exemplary embodiment of the present disclosure;
FIG. 6 is a schematic flowchart of a method for controlling a display device according to still another exemplary embodiment of the present disclosure;
FIG. 7 is a schematic flowchart of a method for controlling a display device according to a fourth exemplary embodiment of the present disclosure;
FIG. 8 is a schematic diagram of a corresponding relationship between a display device and a target user according to an exemplary embodiment of the present disclosure;
FIG. 9 is a schematic flowchart of a method for controlling a display device according to a fifth exemplary embodiment of the present disclosure;
FIG. 10 is a schematic flowchart of a method for controlling a display device according to a sixth exemplary embodiment of the present disclosure;
FIG. 11 is a schematic flowchart of a method for controlling a display device according to a seventh exemplary embodiment of the present disclosure;
FIG. 12 is a schematic flowchart of a method for controlling a display device according to an eighth exemplary embodiment of the present disclosure;
FIG. 13 is a schematic diagram of a structure of an apparatus for controlling a display device according to an exemplary embodiment of the present disclosure; and
FIG. 14 is a schematic diagram of a structure of an electronic device according to an exemplary embodiment of the present disclosure.

### DETAILED DESCRIPTION OF THE EMBODIMENTS

Exemplary embodiments of the present disclosure are described below in detail with reference to accompanying drawings. Obviously, the embodiments described are merely some, rather than all of embodiments of the present disclosure. It should be understood that the present disclosure is not limited by the exemplary embodiments described herein.

It should be noted that, unless otherwise specifically stated, the relative arrangement of components and steps, numerical expressions, and numerical values set forth in these embodiments do not limit the scope of the present disclosure.

### Application overview

Currently, a display device is typically disposed in a vehicle, being capable of playing content such as navigation information and entertainment content, thereby improving riding experience of a driver and a passenger. To ensure a display effect of the display device, the display device needs to occupy substantial computational resources to perform operations such as rendering a high-resolution image, processing a complex graphic effect, or performing high-bitrate video decoding.

However, in an actual driving scenario, attention of the driver and the passenger is not always focused on the display device. For example, when the vehicle is driving on a highway, the driver usually concentrates fully on observing road conditions to ensure driving safety; while the passenger may read, nap, or chat with other customers during the ride, and does not continuously gaze at the display devices either. In this case, if the display device still occupies a large amount of computational power to maintain high display effects, it may result in a waste of computational resources of a chip, affecting overall performance of the vehicle.

Embodiments of the present disclosure propose a novel solution capable of resolving the foregoing problem of the waste of the computational resources. Specifically, the embodiments of the present disclosure provide a method for controlling a display device, which can collect a target image containing a target user, and determine a gaze direction of the target user based on the target image. Thereafter, determining a gaze coverage status based on the gaze direction is specifically determining, based on a spatial relationship between the gaze direction of the target user and a first position where the display device is located, whether a gaze of the target user covers the display device, or a size of a region that is of the display device and is covered by the gaze of the target user. In this way, a display parameter of the display device can be adjusted based on a change in the gaze coverage status. For example, when the display device changes from being uncovered by the gaze to being covered by the gaze, or changes from being partially covered by the gaze to being mostly covered by the gaze, it may be considered that the target user pays more attention to the display device. Therefore, the display parameter of the display device may be increased to improve the display effect of the display device. Conversely, when the display device changes from being covered by the gaze to being uncovered by the gaze, or changes from being mostly covered by the gaze to being partially covered by the gaze, it may be considered that the target user shifts the attention away from the display device. Therefore, the display parameter of the display device may be decreased to reduce the computational resource consumption of the chip. By means of dynamically adjusting the display parameter based on the gaze coverage status, the waste of the computational resources of the chip can be avoided while ensuring viewing experience of the user.

### Exemplary system

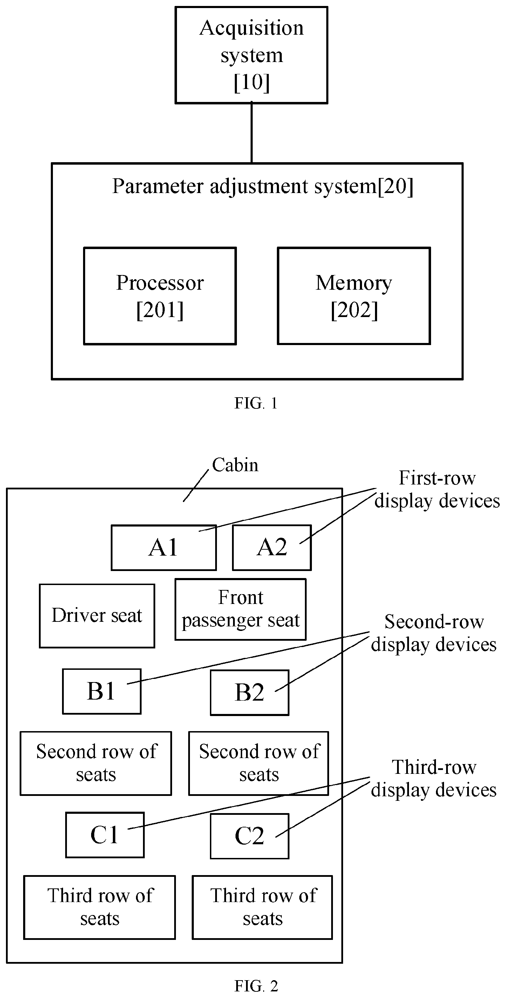

FIG. 1 is a block diagram of a structure of a system for controlling a display device according to an exemplary embodiment of the present disclosure.

As shown in FIG. 1, in an embodiment, the system for controlling a display device may include an acquisition system 10 and a parameter adjustment system 20, where the parameter adjustment system 20 performs data transmission with the acquisition system 10. In addition, the parameter adjustment system 20 may also perform data transmission with the display device, so as to send an instruction to the display device to control the display device to adjust a display parameter.

The display device is disposed in a vehicle cabin, may receive the instruction sent by the parameter adjustment system 20, and may adjust the display parameter based on the received instruction.

FIG. 2 is a schematic diagram of a mounting position of a display device according to an exemplary embodiment of the present disclosure.

As shown in FIG. 2, the display device may include display devices disposed in front of a first row of seats (a driver seat and a front passenger seat) (hereinafter referred to as first-row display devices for short), such as a central control display screen A1 and a front passenger display screen A2; and may also include display devices disposed behind the first row of seats and in front of a non-first row seat (hereinafter referred to as non-first-row display devices for short), such as a rear display screen. The rear display screen may include one or more rows, such as second-row display screens B1 and B2 disposed behind the first row of seats and in front of a second row of seats, and third-row display screens C1 and C2 disposed behind the second row of seats and in front of a third row of seats. One or more display screens may be disposed for the same row. For example, for the second-row display screens described above, the display screen B1 may be disposed in a column where the driver seat is located, and the display screen B2 may be disposed in a column where the front passenger seat is located; and for the third-row display screens described above, the display screen C1 may be disposed in the column where the driver seat is located, and the display screen C2 may be disposed in the column where the front passenger seat is located. Certainly, in some other examples, the third-row display screens C1 and C2 may not be disposed, so that passengers in the third row of seats may watch the second-row display devices together with passengers in the second row of seats. It should be noted that the present disclosure does not limit a quantity of rows of seats in the vehicle cabin.

The acquisition system 10 may include at least one type of sensor for collecting a target image containing a target user. The sensor may be an image sensor, such as a camera or an infrared sensor. The sensor is disposed inside the vehicle, and may specifically be disposed at a position such as above a dashboard or in a dome light region. The acquisition system 10 may perform data transmission with the parameter adjustment system 20. For example, the acquisition system 10 sends the collected target image to the parameter adjustment system 20.

The parameter adjustment system 20 may determine a gaze direction of the target user based on the target image collected by the acquisition system 10, and then determine a gaze coverage status corresponding to the display device based on a spatial relationship between the gaze direction of the target user and a first position where the display device is located. If a gaze covers the display device, display parameters such as a frame rate and resolution of the display device may be adjusted to improve a display effect of the display device, so as to ensure viewing experience of the user. If the gaze does not cover the display device, the display parameters may be adjusted to reduce the display effect of the display device, so as to reduce power consumption and computational resource consumption of the display device.

The parameter adjustment system 20 may include a processor and a memory. The processor is configured to execute instructions stored in the memory, so as to implement the method for controlling a display device. The processor may be one or more general-purpose processors, such as a CPU; or may be a dedicated processor, such as an ASIC or an FPGA. The memory is configured to store instructions executable by the processor and data, such as gaze direction data of the target user and position data of the display device.

In an implementation, the parameter adjustment system 20 may include one or more processors 201. The processor 201 may include a general-purpose processor, such as a central processing unit (CPU) or a graphics processing unit (GPU); and may also include an accelerated computing unit designed for a deep learning task or an autonomous driving task, such as a neural network processor (NPU).

In an implementation, the parameter adjustment system 20 may further include one or more memories 202. The memory 202 may store program instructions executable by the processor 201, which may load and execute the program instructions in the memory 202 to implement functions of the parameter adjustment system 20.

In addition, the memory 202 may also be configured to cache or store intermediate data or result data generated during operation of the processor 201, a system file, an application file, a data file, and the like. For example, the memory 202 may store the target image collected by the acquisition system 10, and gaze direction data of the target user that is calculated based on the target image.

For example, the memory 202 may include a volatile memory such as a dynamic random access memory (DRAM) or a static random access memory (SRAM); and may also include a non-volatile memory (NVM), such as a read-only memory (ROM) or a flash memory.

### Exemplary method

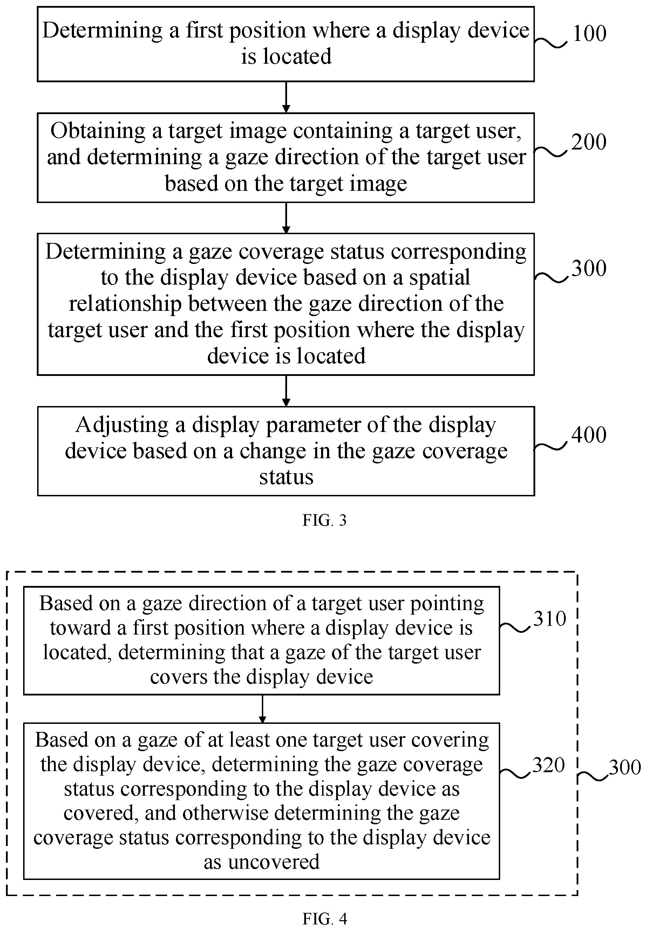

FIG. 3 is a schematic flowchart of a method for controlling a display device according to an exemplary embodiment of the present disclosure. This embodiment may be applied to an electronic device. As shown in FIG. 3, the method includes the following steps.

Step 100: Determining a first position where the display device is located.

In step 100, a display device, such as a central control display screen, a front passenger display screen, or a rear display screen, is disposed in a vehicle. First, a position where the display device is located, that is, a first position, is determined, so as to determine, based on the first position, in subsequent steps whether attention of a target user is on the display device. The first position of the display device may be determined by a vehicle manufacturer during a design phase or a manufacturing phase of the vehicle, or may be determined by a user through approaches such as a calibration method. The first position of the display device may be represented either by using coordinates of four corner points of the display device, or by using coordinates of a center point and a point on a boundary of the display device. The coordinates used to represent the first position where the display device is located may be coordinates in a vehicle coordinate system, or may be coordinates in a coordinate system such as a camera coordinate system corresponding to an in-vehicle camera.

For example, the first position where the display device is located may be predetermined through a calibration method. Specifically, when the user is in a cabin, a position of an eye of the user relative to an in-cabin camera and gaze angles when the user looks at the four corner points of the display device are measured through an instrument; and then position information of the four corner points of the display device relative to the camera, that is, the coordinates of the four corner points of the display device in the camera coordinate system, is obtained through conversion. In this way, the first position of the display device may be represented by using the coordinates of the four corner points in the camera coordinate system.

Step 200: Obtaining a target image containing a target user, and determining a gaze direction of the target user based on the target image.

In step 200, the target image containing the target user is collected by using the image sensor of the acquisition system 10 described above. There may be one or more target users. The target user refers to a user located in the cabin of the vehicle, and may be a driver and/or a passenger corresponding to the vehicle. The target image contains a facial image of the target user, and may be used to analyze a direction that the target user is gazing at, that is, the gaze direction of the target user.

Specifically, a face region may first be detected in the target image, and then key feature points on a face, such as an eye corner, a mouth corner, and a nose tip, are determined in the face region, so as to determine a position of an eye region and a head pose based on the key feature points. Hereinafter, structural features of the eye, such as an eyeball position feature, a pupil offset feature, an iris boundary feature, an eyelid shape feature, and a sclera shape feature, are extracted; and then an eyeball orientation of the target user is determined based on the structural features of the eye through geometric modeling, machine learning, and other methods. Finally, the gaze direction of the target user is determined by combining the head pose of the target user, the position of the eye region, and the eyeball orientation.

In an example, a gaze direction corresponding to a left eye (hereinafter referred to as a left-eye gaze direction) and a gaze direction corresponding to a right eye (hereinafter referred to as a right-eye gaze direction) may be determined respectively based on eyeball orientations of the left eye and the right eye. In this case, the left-eye gaze direction or the right-eye gaze direction may be used as the gaze direction of the target user. Alternatively, the left-eye gaze direction and the right-eye gaze direction may be comprehensively analyzed, and the gaze direction of the target user may be obtained through approaches such as averaging.

Step 300: Determining a gaze coverage status corresponding to the display device based on a spatial relationship between the gaze direction of the target user and the first position where the display device is located.

In step 300, after the gaze direction of the target user and the first position where the display device is located are determined, the gaze coverage status corresponding to the display device may be determined based on the gaze direction and the first position.

Specifically, the spatial relationship between the gaze direction of the target user and the first position where the display device is located may be determined based on a mathematical relationship between a direction vector corresponding to the gaze direction and a coordinate corresponding to the first position. The spatial relationship can indicate whether the gaze direction of the target user points toward the first position where the display device is located, and may be used to determine the gaze coverage status corresponding to the display device. The gaze coverage status may include covered or uncovered. For example, if the gaze direction of the target user points toward the first position where the display device is located, it may be considered that the gaze of the target user covers the display device, and therefore, it is determined that the gaze coverage status corresponding to the display device is covered. Otherwise, it may be considered that the gaze of the target user does not cover the display device, and therefore, it is determined that the gaze coverage status corresponding to the display device is uncovered.

In an example, the spatial relationship can further indicate a degree of deviation of the gaze direction of the target user relative to the first position. In this case, the gaze coverage status may include a size of a covered region. For example, if the degree of deviation of the gaze direction of the target user relative to the first position is relatively low, it may be considered that the gaze of the target user covers a relatively large region of the display device; and otherwise, it may be considered that the gaze of the target user covers a relatively small region of the display device.

Step 400: Adjusting a display parameter of the display device based on a change in the gaze coverage status.

In step 400, if the coverage status of the display device changes, it may be considered that the attention of the target user on the display device has changed. Therefore, the display parameter of the display device may be correspondingly adjusted. For example, if the gaze coverage status of the display device changes from uncovered to covered, or the covered region increases, it may be considered that the target user is paying more attention to the display device. Therefore, the display parameter may be increased, such as increasing screen brightness, increasing color saturation, increasing a frame rate, or enabling anti-aliasing, so as to improve the display effect. Conversely, if the gaze coverage status of the display device changes from covered to uncovered, or the covered region decreases, it may be considered that the target user is paying less attention to the display device. Therefore, the display parameter may be decreased, such as decreasing the screen brightness, decreasing the color saturation, decreasing the frame rate, or disabling the anti-aliasing, so as to reduce the computational resource consumption of the chip.

In an example, a plurality of display modes may be preset, and display parameters with different values may be set for each display mode, respectively. For example, an energy-saving mode may correspond to a lower display parameter, and a full-performance mode may correspond to a higher display parameter. In this way, the display mode may be switched based on the change in the gaze coverage status, and then an image may be displayed by using the display parameter corresponding to the display mode.

It may be learned from the foregoing technical solutions that according to the method provided in the embodiments of the present disclosure, the first position where the display device is located is first determined, and then the target image containing the target user is collected, and the gaze direction of the target user is determined based on the target image. Thereafter, determining the gaze coverage status based on the gaze direction is specifically determining, based on the spatial relationship between the gaze direction of the target user and the first position where the display device is located, whether the gaze of the target user covers the display device, or a size of a region that is of the display device and is covered by the gaze of the target user. In this way, the display parameter of the display device can be adjusted based on the change in the gaze coverage status. For example, when the display device changes from being uncovered by the gaze to being covered by the gaze, or changes from being partially covered by the gaze to being mostly covered by the gaze, it may be considered that the target user pays more attention to the display device. Therefore, the display parameter of the display device may be increased to improve the display effect of the display device. Conversely, when the display device changes from being covered by the gaze to being uncovered by the gaze, or changes from being mostly covered by the gaze to being partially covered by the gaze, it may be considered that the target user shifts the attention away from the display device. Therefore, the display parameter of the display device may be decreased to reduce the computational resource consumption of the chip. By means of dynamically adjusting the display parameter based on the gaze coverage status, the waste of the computational resources of the chip can be avoided while ensuring viewing experience of the user.

FIG. 4 is a schematic flowchart of a method for controlling a display device according to another exemplary embodiment of the present disclosure.

As shown in FIG. 4, on the basis of the embodiment shown in FIG. 3, step 300 may include the following steps.

Step 310: Based on the gaze direction of the target user pointing toward the first position where the display device is located, determining that a gaze of the target user covers the display device.

In step 310, it may be determined, based on a geometric relationship between the direction vector corresponding to the gaze direction and the coordinate corresponding to the first position, whether the gaze direction of the target user points toward the first position where the display device is located. If the gaze direction of a target user points toward the first position where the display device is located, it may be considered that the gaze of this target user covers the display device.

Specifically, first, it is determined whether the direction vector corresponding to the gaze direction of the target user and the coordinate corresponding to the first position where the display device is located are in the same coordinate system. If not, the direction vector and the coordinate are converted to the same coordinate system. For example, if the direction vector corresponding to the gaze direction of the target user is a direction vector in the camera coordinate system and the coordinate corresponding to the display device is a coordinate in the vehicle coordinate system, based on an extrinsic camera parameter, the direction vector corresponding to the gaze direction may be converted to the vehicle coordinate system, or the coordinate corresponding to the display device may be converted to the camera coordinate system.

Subsequently, the gaze direction when the target user is gazing at the display device (hereinafter denoted as a target direction) is determined based on the first position where the display device is located and a position where the eye of the target user is located (hereinafter denoted as a second position). For example, if the coordinate of the first position where the display device is located is p_qr_dms, and a coordinate of the second position where the eye of the target user is located is p_eye_dms, the target direction between the target user and the display device may be expressed in a form of a vector, which is specifically v_target = p_qr_dms - p_eye_dms.

Considering that the first position where the display device is located occupies a certain region, there are subtle differences in gaze directions when the target user gazes at different position points within the region. In other words, target directions pointing from the second position where the target user is located toward different position points within the region occupied by the display device are also different. Based on this, a target vector range may be determined based on vectors corresponding to a plurality of different target directions. The target vector range may include a direction vector corresponding to the target direction for the target user gazing at any position in the region occupied by the display device.

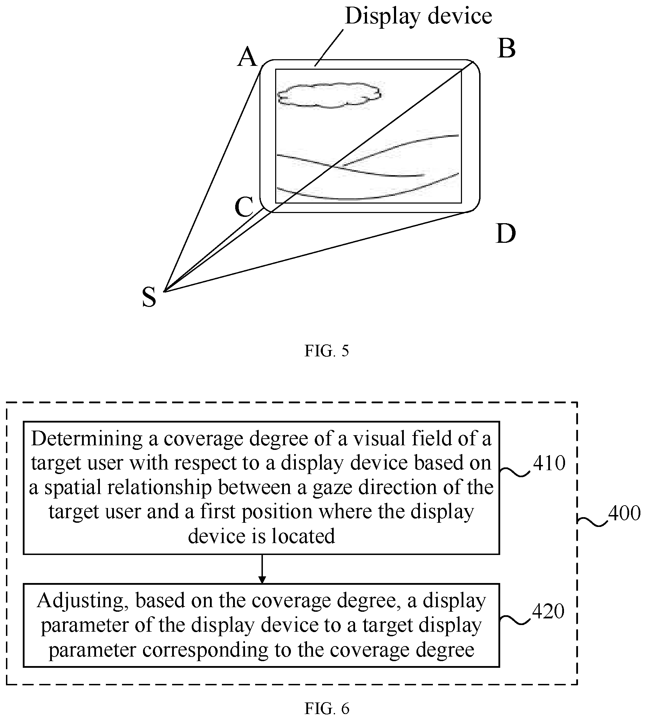

A method for determining the target vector range is described below with reference to FIG. 5.

FIG. 5 is a schematic diagram of a target vector range according to an exemplary embodiment of the present disclosure.

For example, several reference points may be determined based on the display device. For example, as shown in FIG. 5, four corner points A, B, C, and D of the display device are determined as reference points. Thereafter, a target direction from a second position S where the target user is located to a position point where each reference point is located is respectively determined. In this way, a corresponding direction vector may be respectively obtained for each target direction. For example, a target direction from the point S to the point A in FIG. 5 may correspond to a direction vector SA, and similarly, direction vectors SB, SC, and SD may be obtained. Directions defined by the four direction vectors form a cone-shaped region, and a range corresponding to the cone-shaped region is the target vector range.

It should be noted that, to avoid missed determining, the four corner points in FIG. 5 may be respectively expanded outward along a diagonal direction of the display device, to obtain A1, B1, C1, and D1 (not shown in FIG. 5). Moreover, A1, B1, C1, and D1 are used as new reference points. A distance of the outward expansion may be adjusted according to actual application requirements.

Finally, whether the gaze direction of the target user points toward the first position where the display device is located is determined based on the direction vector corresponding to the gaze direction of the target user and the target vector range. Specifically, if the direction vector corresponding to the gaze direction of the target user falls within the target vector range, it may be considered that the gaze of the target user points toward the first position where the display device is located. In this case, it may be considered that the gaze of the target user covers the display device, and the target user is watching content played by the display device. Conversely, if the direction vector corresponding to the gaze direction of the target user falls outside the target vector range, it may be considered that the gaze of the target user does not point toward the first position where the display device is located. In this case, it may be considered that the gaze of the target user does not cover the display device, and the target user is not currently watching the content played by the display device.

Step 320: Based on a gaze of at least one target user covering the display device, determining the gaze coverage status corresponding to the display device as covered, and otherwise determining the gaze coverage status corresponding to the display device as uncovered.

In step 320, if there is only one target user in the vehicle and the gaze of the target user covers the display device, or if there are a plurality of target users in the vehicle and the gaze of at least one target user covers the display device, it may be considered that the target user is watching the content displayed by the display device. Therefore, the gaze coverage status corresponding to the display device is determined as covered, and then higher display parameters may be adopted to ensure viewing experience of the target user.

If gazes of all target users do not cover the display device, it may be considered that none of the users is watching the content displayed by the display device. Therefore, the gaze coverage status corresponding to the display device is determined as uncovered, and then lower display parameters may be adopted to reduce the computational resource consumption of the chip and energy consumption of the display device.

It may be learned from the foregoing technical solutions that according to the method provided in the embodiments of the present disclosure, whether the gaze of the target user covers the display device is determined by determining whether the gaze direction of the target user points toward the first position where the display device is located. The gaze coverage status of the display device is determined as covered, provided that the gaze of any target user covers the display device. Only when the gazes of all the target users do not cover the display device, the gaze coverage status of the display device is determined as uncovered. In this way, individual requirements of each target user can be fully respected, thereby ensuring the viewing experience of each target user.

FIG. 6 is a schematic flowchart of a method for controlling a display device according to still another exemplary embodiment of the present disclosure.

As shown in FIG. 6, on the basis of the embodiment shown in FIG. 3, step 400 may include the following steps.

Step 410: Determining a coverage degree of a visual field of the target user with respect to the display device based on the spatial relationship between the gaze direction of the target user and the first position where the display device is located.

In step 410, the visual field of the target user may be determined based on the gaze direction of the target user, and then the coverage degree of the visual field of the target user with respect to the display device may be determined based on a spatial relationship between the visual field of the target user and the coordinate corresponding to the first position where the display device is located.

Specifically, the target vector range may be determined by using the method in step 310, and the visual field of the target user may be determined based on the gaze direction of the target user. The visual field of the target user may be a cone-shaped region having the eyes of the target user as a vertex and the gaze direction of the target user as an axis. In this way, the coverage degree of the visual field of the target user with respect to the display device may be determined based on an overlapping portion between the target vector range and the visual field of the target user. It may be understood that the larger overlapping portion between the target vector range and the visual field of the target user is, the higher the coverage degree of the visual field of the target user with respect to the display device is.

Step 420: Adjusting, based on the coverage degree, the display parameter of the display device to a target display parameter corresponding to the coverage degree.

In step 420, it may be understood that when the visual field of the target user covers the display device to a large extent, it may be considered that the target user is highly focused on the display device. Conversely, when the visual field of the target user covers the display device only to a small extent, it may be considered that the target user has a low level of focus on the display device. Therefore, the display parameter of the display device may be adjusted based on the coverage degree of the visual field of the target user with respect to the display device. For example, a corresponding relationship between the coverage degree and the target display parameter may be designed in advance. For example, a coverage degree of 30% corresponds to a first display parameter, and a coverage degree of 50% corresponds to a second display parameter. In this way, the target display parameter may be determined based on the coverage degree, and then the display parameter of the display device may be adjusted to the target display parameter.

It may be learned from the foregoing technical solutions that according to the method provided in the embodiments of the present disclosure, in addition to increasing or decreasing the display parameter based on whether the gaze of the target user covers the display device, fine adjustment for the display parameter is further implemented, when a gaze-covered region changes, based on the coverage degree of the visual field of the target user with respect to the display device. In this way, by dynamically adjusting the display parameter based on the coverage degree, a level of focus of the target user on the display device can be determined more accurately. Therefore, the viewing experience of the target user can be further improved, and at the same time, optimal utilization of energy consumption and computational resources can be achieved.

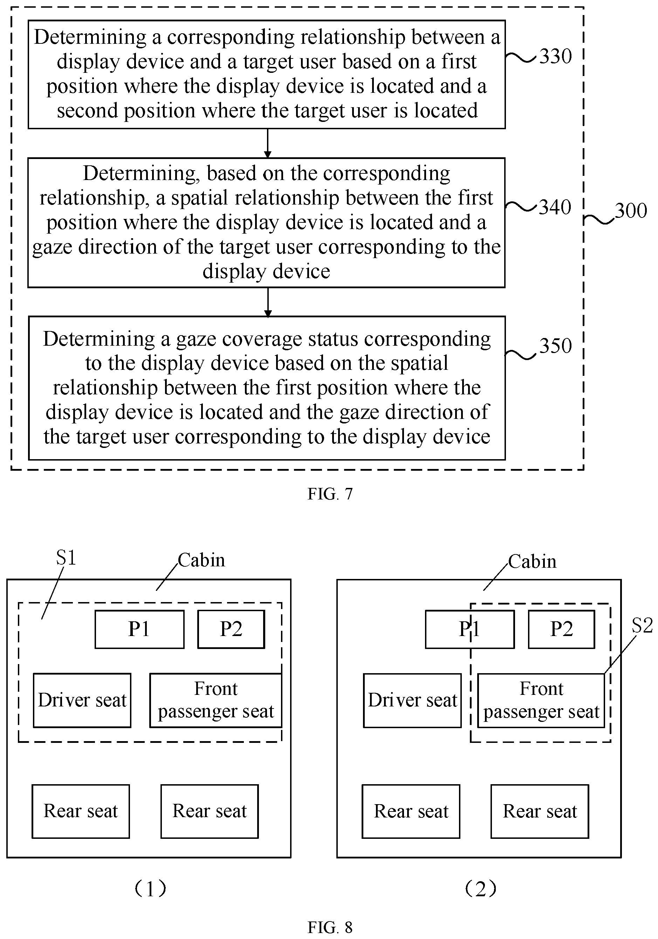

FIG. 7 is a schematic flowchart of a method for controlling a display device according to a fourth exemplary embodiment of the present disclosure.

As shown in FIG. 7, on the basis of the embodiment shown in FIG. 3, step 300 may include the following steps.

Step 330: Determining a corresponding relationship between the display device and the target user based on the first position where the display device is located and a second position where the target user is located.

In step 330, when the vehicle is provided with a plurality of display devices, the target user usually prefers to watch a closer display device or a display device that meets a best viewing angle of the target user, and rarely watches a display device that is far away or does not meet the best viewing angle. Even when watching, due to reasons such as a distance and a viewing angle, the target user has no significant perception of changes in a frame rate, resolution, and image quality effects of the display device. Therefore, parameters such as a distance or an angle between the target user and the display device may be calculated based on the first position where the display device is located and the second position where the target user is located, and then the corresponding relationship between the display device and the target user may be determined based on these parameters. The display device corresponding to each target user is a display device that the target user prefers to watch. In this way, for each display device, it may be merely determined whether the gaze of the target user corresponding thereto covers the display device.

In an example, a corresponding region may be defined for each display device. If the target user is located within the region corresponding to a display device, it may be considered that the target user corresponds to this display device. Regions corresponding to a plurality of display devices may have an overlapping portion, so that the target user located in the overlapping portion may simultaneously correspond to a plurality of display devices. There may be a plurality of target users in the region corresponding to one display device, so that one display device may simultaneously correspond to a plurality of target users.

In an example, the region corresponding to the display device may include at least one seat. For a display device, a seat within the corresponding region is located behind this display device in a longitudinal direction of a vehicle body, and no other seat is interposed between this seat and this display device in the longitudinal direction of the vehicle body.

The corresponding relationship between the display device and the target user in this example is described below with reference to FIG. 8.

FIG. 8 is a schematic diagram of a corresponding relationship between a display device and a target user according to an exemplary embodiment of the present disclosure.

As shown in FIG. 8, a central control screen P1 and a front passenger screen P2 are disposed in a front row of the vehicle. As shown in (1) of FIG. 8, the region corresponding to the central control screen P1 is S1, and both the driver seat and the front passenger seat are located within the region S1. As shown in (2) of FIG. 8, the region corresponding to the front passenger screen P2 is S2, and the front passenger seat is located within the region S2. Considering that rear seats are far from the central control screen P1 and the front passenger screen P2, the rear seats are neither in the region S1 nor in the region S2. In this way, the central control screen P1 corresponds to the driver at the driver seat and a passenger 1 at the front passenger seat; the front passenger screen P2 corresponds to the passenger 1 at the front passenger seat; and a passenger 2 and a passenger 3 at the rear seats correspond to neither the central control screen P1 nor the front passenger screen P2.

Step 340: Determining, based on the corresponding relationship, the spatial relationship between the first position where the display device is located and the gaze direction of the target user corresponding to the display device.

In step 340, for each display device, the target user corresponding to the display device is determined based on the corresponding relationship between the display device and the target user, and then the spatial relationship between the first position where the display device is located and the gaze direction of the target user is determined.

In an example, as shown in FIG. 8, for the central control screen P1, the spatial relationship between the first position where the central control screen P1 is located and the gaze direction of the driver, and the spatial relationship between the first position where the central control screen P1 is located and the gaze direction of the passenger 1 may be determined, respectively. For the passenger 2 and the passenger 3 at the rear seats, spatial relationships between the first position where the central control screen P1 is located and the gaze directions of the two passengers are not analyzed, so as to reduce computational complexity and computational power consumption.

Step 350: Determining the gaze coverage status corresponding to the display device based on the spatial relationship between the first position where the display device is located and the gaze direction of the target user corresponding to the display device.

In step 350, after the spatial relationship between the first position where the display device is located and the gaze direction of the target user corresponding to the display device is determined, the gaze coverage status corresponding to the display device is determined based on the spatial relationship. As shown in FIG. 8, the gaze coverage status corresponding to the central control screen P1 may be determined for the spatial relationship between the first position where the central control screen P1 is located and the gaze direction of the driver, and the spatial relationship between the first position where the central control screen P1 is located and the gaze direction of the passenger 1.

For a specific manner of determining the gaze coverage status based on the spatial relationship, refer to step 300 described above, and details are not described herein.

It may be learned from the foregoing technical solutions that according to the method provided in the embodiments of the present disclosure, in a scenario where the vehicle is provided with a plurality of display devices, the gaze coverage status may be determined based only on the target users corresponding to the display devices by determining corresponding relationships between the display devices and the target users, thereby reducing the computational complexity and the computational power consumption. Meanwhile, since only the target user corresponding to the display device is analyzed and the display parameter is adjusted based on an analysis result, interference of other target users is eliminated, so that the adjustment of the display parameter is more accurate and better conforms to actual user requirements.

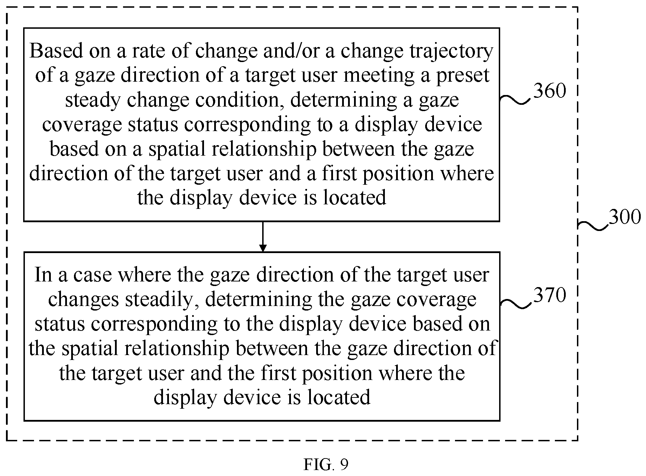

FIG. 9 is a schematic flowchart of a method for controlling a display device according to a fifth exemplary embodiment of the present disclosure.

As shown in FIG. 9, on the basis of the embodiment shown in FIG. 3, step 300 may include the following steps.

Step 360: Determining, based on a rate of change and/or a change trajectory of the gaze direction of the target user, whether the gaze direction of the target user changes steadily.

In step 360, considering factors such as vehicle vibration, there is a possibility that the gaze direction of the target user changes frequently. If the gaze coverage status corresponding to the display device is determined and the display parameter is adjusted accordingly every time the gaze direction of the target user changes, the display parameter may change frequently, which not only increases the computational resource consumption of the chip but also affects the viewing experience of the target user. Therefore, when determining the gaze coverage status corresponding to the display device, it may be considered whether the rate of change and/or the change trajectory of the gaze direction of the target user changes steadily.

In an example, whether the gaze direction of the target user changes steadily may be determined through a preset steady change condition, such as a constraint condition on the rate of change or a constraint condition on a change acceleration of the gaze direction. Specifically, when the rate of change of the gaze direction is constant or the change acceleration of the gaze direction is small (or constant), it may be considered that the rate of change of the gaze direction meets the preset steady change condition, and the change of the gaze direction is relatively steady. In this case, subsequent steps of determining the gaze coverage status and adjusting the display parameter may be performed based on the gaze direction. In this way, whether to adjust the display parameter is only determined when the gaze direction changes steadily, so that a problem of frequent adjustment of the display parameter caused by frequent changes in the gaze direction can be avoided.

In an example, whether the gaze direction of the target user changes steadily may be determined through a preset steady change condition, such as a constraint condition on the change trajectory of the gaze direction. Specifically, when the change trajectory of the gaze direction is predictable, it may be considered that the rate of change of the gaze direction meets the preset steady change condition, and the change of the gaze direction is relatively steady.

A tracking and prediction technique may be used to predict the change trajectory of the gaze direction. The tracking and prediction technique is a technique that analyzes a trajectory of a moving target in a historical frame based on continuity and regularity of motion, to extract a motion pattern of the moving target, and then predict, based on the motion pattern, positions of the moving target at several future moments. Specifically, tracking and prediction of the gaze direction trajectory refers to estimating a future change trend of the gaze direction by using motion information (such as a position, a speed, and an acceleration) of the gaze direction at a historical moment in a continuous time series, so as to implement understanding and prediction of a dynamic behavior of the gaze. In a specific application process, the tracking and prediction of the gaze direction trajectory may be implemented through the following three steps: First, trajectory modeling is performed. Specifically, a temporal position sequence of the gaze direction is extracted from historical data, and a trajectory representation (such as a time-space curve) is constructed. Subsequently, motion modeling is performed. Specifically, it is assumed that the change of the gaze direction satisfies a certain model (such as constant velocity and nonlinearity), or a motion rule is learned through a data-driven model. Finally, trajectory prediction is performed. Specifically, the model is extrapolated to a future time, and possible positions of the gaze direction and distribution of the possible positions are estimated. An uncertainty modeling method may be adopted in this process. In a motion modeling stage, a physical model (such as constant velocity and Kalman filtering), a statistical model (such as Markov), or a data-driven model (such as LSTM or Transformer) may be adopted.

Step 370: In a case where the gaze direction of the target user changes steadily, determining the gaze coverage status corresponding to the display device based on the spatial relationship between the gaze direction of the target user and the first position where the display device is located.

In step 370, if the gaze direction of the target user changes steadily, it may be considered that the target user is stably watching the display device. In this case, the gaze coverage status corresponding to the display device may be accurately determined based on the spatial relationship between the gaze direction of the target user and the first position where the display device is located. For a specific manner of determining the gaze coverage status based on the spatial relationship, refer to step 300 described above, and details are not described herein. Certainly, according to the method in steps 330 to 350 described above, the corresponding relationship between the display device and the target user may also be determined first; and then the spatial relationship between the first position where the display device is located and the gaze direction of the target user corresponding to the display device may be determined based on the corresponding relationship; and finally, the gaze coverage status corresponding to the display device may be determined based on the spatial relationship. In this way, in a case where the gaze direction of the target user changes steadily, the gaze coverage status of the display device can be accurately determined in a timely manner, thereby providing a reliable basis for subsequent adjustment of the display parameter.

It may be learned from the foregoing technical solutions that according to the method provided in the embodiments of the present disclosure, it is determined whether the rate of change and/or the change trajectory of the gaze direction of the target user meets the preset steady change condition, so that the gaze coverage status corresponding to the display device may be determined based on the spatial relationship when the gaze direction of the target user changes steadily. In this way, the problem of frequent changes in the display parameter caused by factors such as vehicle vibration can be avoided, which can not only reduce unnecessary computational resource consumption caused by frequent determining of the gaze coverage status, but also prevent the frequent adjustment of the display parameter from affecting the viewing experience of the target user.

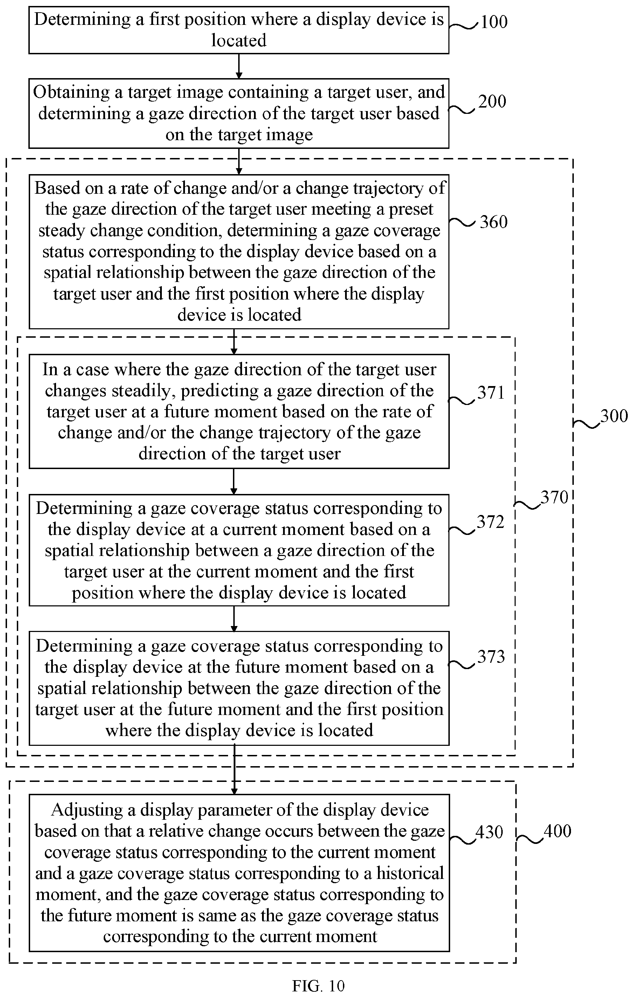

FIG. 10 is a schematic flowchart of a method for controlling a display device according to a sixth exemplary embodiment of the present disclosure.

As shown in FIG. 10, on the basis of the embodiment shown in FIG. 9, step 370 may include the following steps.

Step 371: In the case where the gaze direction of the target user changes steadily, predicting a gaze direction of the target user at a future moment based on the rate of change and/or the change trajectory of the gaze direction of the target user.

In step 371, if the gaze direction of the target user changes steadily, subsequent steps of determining the gaze coverage status and adjusting the display parameter may be performed based on the gaze direction. Specifically, to further improve accuracy of display parameter switching and ensure the viewing experience of the target user, when determining the gaze coverage status of the display device, in addition to determining a current gaze direction of the target user based on the target image, the gaze direction of the target user at the future moment may also be predicted based on the rate of change and/or the change trajectory of the gaze direction of the target user. In this way, the current gaze direction and the gaze direction at the future moment may be comprehensively analyzed, thereby ensuring the accuracy of display parameter switching.

Based on this, in the case where the gaze direction of the target user changes steadily, the gaze direction of the target user at the future moment may first be predicted based on the rate of change and/or the change trajectory of the gaze direction of the target user. The future moment refers to a moment shortly after the current moment. The tracking and prediction technique may be used to predict the gaze direction at the future moment. For specific description of the tracking and prediction technique, refer to the foregoing embodiments, and details are not described herein again.

Step 372: Determining a gaze coverage status corresponding to the display device at a current moment based on the spatial relationship between the gaze direction of the target user and the first position where the display device is located.

In step 372, in the case where the gaze direction of the target user changes steadily, after a gaze direction of the target user at the current moment is determined based on the collected target image, the gaze coverage status corresponding to the display device at the current moment (referred to as a current gaze coverage status for short) may be determined based on a spatial relationship between the gaze direction at the current moment and the first position where the display device is located. Specifically, for the method of determining the current gaze coverage status, refer to step 300 described above, and details are not described herein.

Step 373: Determining a gaze coverage status corresponding to the display device at the future moment based on a spatial relationship between the gaze direction of the target user at the future moment and the first position where the display device is located.

In step 373, in the case where the gaze direction of the target user changes steadily, after the gaze direction of the target user at the future moment is determined, the gaze coverage status corresponding to the display device at the future moment (referred to as a future gaze coverage status for short) may be determined based on the spatial relationship between the gaze direction at the future moment and the first position where the display device is located. Specifically, the method of determining the future gaze coverage status is same as that of determining the current gaze coverage status, and details are not described herein.

As shown in FIG. 10, step 400 may include the following step.

Step 430: Adjusting the display parameter of the display device based on that a relative change occurs between the gaze coverage status corresponding to the current moment and a gaze coverage status corresponding to a historical moment, and the gaze coverage status corresponding to the future moment is same as the gaze coverage status corresponding to the current moment.

In step 430, the gaze coverage status corresponding to the display device at the current moment and the gaze coverage status at the future moment are comprehensively analyzed, and the display parameter of the display device is adjusted based on an analysis result. For example, if the gaze coverage status corresponding to the display device at the current moment is different from the gaze coverage status corresponding to the historical moment, for example, the gaze coverage status corresponding to the historical moment is uncovered while the gaze coverage status corresponding to the current moment is covered (that is, at the current moment, the gaze coverage status of the display device changes from uncovered to covered), and the gaze coverage status at the future moment also remains covered (that is, the gaze coverage status at the future moment is same as the gaze coverage status at the current moment), the display parameter may be adjusted to improve the display effect of the display device. If the display device is at a boundary between uncovered and covered at the current moment, and within a short period of time in the future, although the rate of change of the gaze direction is not fast but the display device repeatedly switches between covered and uncovered, the display parameter of the display device may not be adjusted, so as to prevent frequent parameter switching from affecting the viewing experience of the user.

It may be learned from the foregoing technical solutions that according to the method provided in the embodiments of the present disclosure, when the gaze direction of the target user changes steadily, not only the gaze direction at the current moment is considered, but the gaze direction at the future moment is also predicted, so that the spatial relationships between the current gaze direction and the gaze direction at the future moment and the display device can be comprehensively analyzed, so as to determine the gaze coverage statuses of the display device at the current moment and the future moment. In this way, the display parameter of the display device may be adjusted based on more comprehensive information about the gaze coverage status, thereby further ensuring the viewing experience of the user.

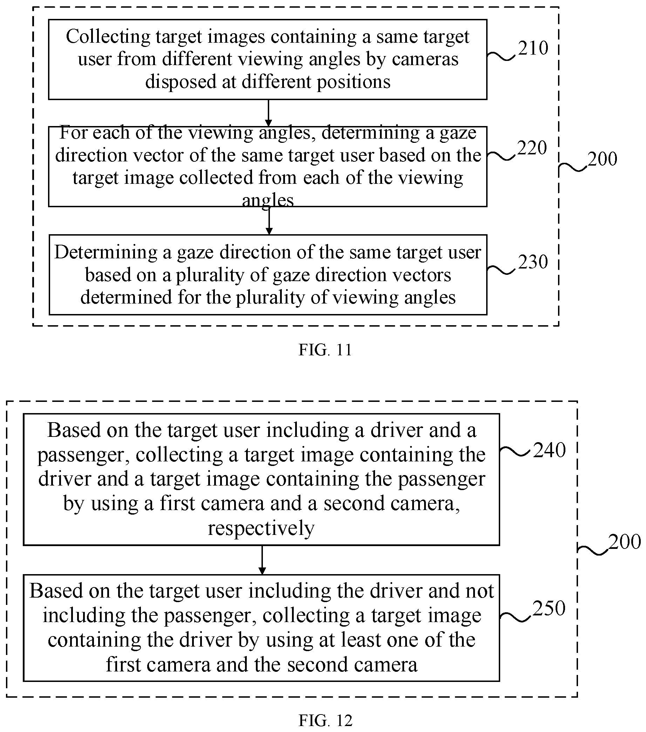

FIG. 11 is a schematic flowchart of a method for controlling a display device according to a seventh exemplary embodiment of the present disclosure.

As shown in FIG. 11, on the basis of the embodiment shown in FIG. 3, step 200 may include the following steps.

Step 210: Collecting target images containing the same target user from different viewing angles by cameras disposed at different positions.

In step 210, cameras are disposed at different positions in the vehicle. For example, cameras may be disposed respectively at positions such as a front windshield region, a central control region, and a seat backrest region of the vehicle. In this way, the cameras at different positions may collect target images containing the same target user from different viewing angles, and the gaze direction of the target user may be comprehensively analyzed through a plurality of target images from different angles, thereby improving accuracy of the gaze direction.

Step 220: For each of the viewing angles, determining a gaze direction vector of the same target user based on the target image collected from each of the viewing angles.

In step 220, for each target image collected from each of the viewing angles, the gaze direction of the target user in the target image may be determined by using the method in step 200 described above, and may be represented in a form of a direction vector, that is, a gaze direction vector. For example, for the viewing angle corresponding to a camera C1, a gaze direction vector [pitch1, yaw1] may be obtained based on the target image collected by the camera C1; and for the viewing angle corresponding to a camera C2, a gaze direction vector [pitch2, yaw2] may be obtained based on the target image collected by the camera C2.

Step 230: Determining a gaze direction of the same target user based on a plurality of gaze direction vectors determined for the plurality of viewing angles.

In step 230, the gaze direction vectors obtained for the viewing angles in step 220 described above are comprehensively analyzed, so as to determine the gaze direction of the target user. A weighted summation approach may be adopted, in which a weight is assigned to the gaze direction vector corresponding to each camera, and a weighted sum is calculated to obtain a final gaze direction. For the foregoing two gaze direction vectors [pitch1, yaw1] and [pitch2, yaw2], a weight [alpha1, beta1] may be assigned to the gaze direction vector [pitch1, yaw1] corresponding to the camera C1, and a weight [alpha2, beta2] may be assigned to the gaze direction vector [pitch2, yaw2] corresponding to the camera C2. In this way, the following results may be obtained through weighted summation:$pitch = alpha 1 \times pitch 1 + beta 1 \times pitch 2 ;$ and$yaw = alpha 2 \times yaw 1 + beta 2 \times yaw 2 .$

pitch and yaw respectively represent a pitch angle and a yaw angle corresponding to the gaze direction of the target user.

In an example, the weight may be determined through offline calibration. Specifically, several pieces of data may be collected offline, and an optimal weight value may be determined by fitting based on the collected data.

In an example, the weight may also be determined based on factors such as a relative position between the camera and the target user and performance of the camera, so as to improve accuracy of the finally determined gaze direction. For example, if a camera is located closer to the target user, or the camera has higher performance, a larger weight may be assigned to the gaze direction vector corresponding to the image collected by this camera.

It may be learned from the foregoing technical solutions that according to the method provided in the embodiments of the present disclosure, the target images are collected through a plurality of cameras disposed at different positions, and the gaze direction of the target user in the plurality of target images is comprehensively analyzed, so that the accuracy of determining the gaze direction can be improved, thereby improving precision of adjusting the display parameter.

FIG. 12 is a schematic flowchart of a method for controlling a display device according to an eighth exemplary embodiment of the present disclosure.

As shown in FIG. 12, on the basis of the embodiment shown in FIG. 3, step 200 may include the following steps.

Step 240: Based on the target user including a driver and a passenger, collecting a target image containing the driver and a target image containing the passenger by using a first camera and a second camera, respectively.

In step 240, when there are both a driver and a passenger in the cabin of the vehicle, the first camera may be used to collect a target image containing the driver, and the second camera may be used to collect a target image containing the passenger. The first camera may be a camera corresponding to a driver monitoring system (DMS), and the second camera may be a camera corresponding to an occupant monitoring system (OMS).

In an example, both the front passenger seat and the rear seats in the cabin have passengers. In this case, a camera corresponding to a front-row occupant monitoring system may be used to collect a target image containing the front-passenger-seat passenger, and a camera corresponding to a rear-row occupant monitoring system may be used to collect a target image containing the rear-seat passenger.

In another example, both the front passenger seat and the rear seats in the cabin have passengers. In this case, a camera corresponding to a front-row occupant monitoring system may be used to collect a target image containing the front-passenger-seat passenger, and simultaneously, the camera corresponding to the front-row occupant monitoring system and a camera corresponding to a rear-row occupant monitoring system may be used to collect a target image containing the rear-seat passenger. In this case, a gaze direction of the rear-seat passenger may be determined by using the methods in steps 210 to 230.

Step 250: Based on the target user including the driver and not including the passenger, collecting a target image containing the driver by using at least one of the first camera and the second camera.

In step 250, when there is only a driver and no passenger in the cabin of the vehicle, the first camera or the second camera may be used to collect a target image containing the driver, and then a gaze direction of the driver may be determined based on the collected target image. In addition, both the first camera and the second camera may also be used simultaneously to collect the target image containing the driver, and the gaze direction of the driver may be determined by using the methods in steps 210 to 230.

In addition, in some other embodiments, the first camera may also be used to obtain the target image containing the passenger, or the second camera may be used to obtain the target image containing the driver. To be specific, in some other embodiments, the corresponding relationship between the camera and the target user is not limited, and any camera may be used to collect the target image containing any target user. In this way, flexibility of obtaining the target image may be further improved.

It may be learned from the foregoing technical solutions that according to the method provided in the embodiments of the present disclosure, one or more cameras may be flexibly selected to collect the target image based on a type (a driver or a passenger) and a quantity of the target users in the cabin, and then the gaze direction of the target user may be determined. In this way, not only efficiency of collecting the target image can be improved, but accuracy and reliability of determining the gaze direction of the target user can also be improved, providing more accurate data support for subsequent determining of the gaze coverage status and adjustment of the display parameter based on the gaze direction.

It should be understood that values of serial numbers of the steps in the foregoing embodiments do not imply an order of execution. An execution sequence of processes needs to be determined by functions and internal logic thereof, and should not constitute any limitation on the implementation processes of the embodiments of the present disclosure. For example, the steps described in the foregoing embodiments may be implemented in parallel, in sequence, or in different orders, provided that expected results of the technical solutions disclosed in the present disclosure can be achieved. This is not limited in the present disclosure.

### Exemplary apparatus

The method for controlling a display device provided in the embodiments of the present disclosure is described above. It may be understood that to implement functions of the method for controlling a display device, a system for controlling a display device may include corresponding hardware and software for implementing functions of the hardware.

A person skilled in the art should easily conceive that, in combination with the steps of the method for controlling a display device described in the embodiments of the present disclosure, the embodiments of the present disclosure can be implemented in a form of hardware or a combination of software-driven hardware. Whether a certain function is implemented in a form of hardware or software-driven hardware depends on specific application and design constraints of the technical solutions. A person skilled in the art may use different methods to implement the described functions for each specific application, but such implementation should not be considered beyond the scope of the present disclosure.

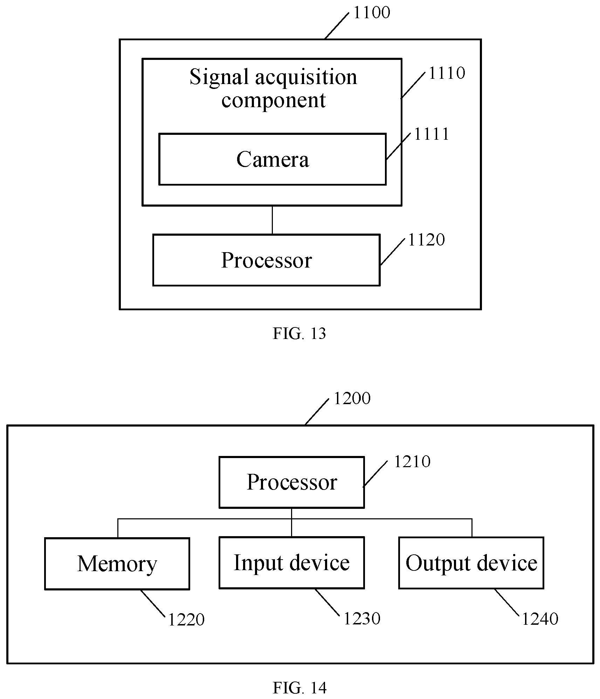

FIG. 13 is a schematic diagram of a structure of an apparatus for controlling a display device according to an exemplary embodiment of the present disclosure.

As shown in FIG. 13, in an embodiment, an apparatus 1100 for controlling a display device includes a signal acquisition component 1110 and one or more processors 1120.

The signal acquisition component 1110 includes a camera 1111, wherein the camera 1111 is configured to obtain a target image containing a target user.

The one or more processors 1120 are configured to: when running instructions stored in a memory, determine a first position where the display device is located; determine a gaze direction of the target user based on the target image; determine a gaze coverage status corresponding to the display device based on a spatial relationship between the gaze direction of the target user and the first position where the display device is located; and adjust a display parameter of the display device based on a change in the gaze coverage status.

In an exemplary embodiment, the processor 1120 is configured to execute the instructions stored in the memory to perform the following operations: based on the gaze direction of the target user pointing toward the first position where the display device is located, determining that a gaze of the target user covers the display device; and based on a gaze of at least one target user covering the display device, determining the gaze coverage status corresponding to the display device as covered, and otherwise determining the gaze coverage status corresponding to the display device as uncovered.

In an exemplary embodiment, the processor 1120 is configured to execute the instructions stored in the memory to perform the following operations: determining a coverage degree of a visual field of the target user with respect to the display device based on the spatial relationship between the gaze direction of the target user and the first position where the display device is located; and adjusting, based on the coverage degree, the display parameter of the display device to a target display parameter corresponding to the coverage degree.

In an exemplary embodiment, the processor 1120 is configured to execute the instructions stored in the memory to perform the following operations: determining a corresponding relationship between the display device and the target user based on the first position where the display device is located and a second position where the target user is located; determining, based on the corresponding relationship, the spatial relationship between the first position where the display device is located and the gaze direction of the target user corresponding to the display device; and determining the gaze coverage status corresponding to the display device based on the spatial relationship between the first position where the display device is located and the gaze direction of the target user corresponding to the display device.

In an exemplary embodiment, the processor 1120 is configured to execute the instructions stored in the memory to perform the following operations: determining, based on a rate of change and/or a change trajectory of the gaze direction of the target user, whether the gaze direction of the target user changes steadily; and in a case where the gaze direction of the target user changes steadily, determining the gaze coverage status corresponding to the display device based on the spatial relationship between the gaze direction of the target user and the first position where the display device is located.

In an example, the processor 1120 is configured to execute the instructions stored in the memory to perform the following operations: in the case where the gaze direction of the target user changes steadily, predicting a gaze direction of the target user at a future moment based on the rate of change and/or the change trajectory of the gaze direction of the target user; determining a current gaze coverage status corresponding to the display device based on the spatial relationship between the gaze direction of the target user and the first position where the display device is located; determining a future gaze coverage status corresponding to the display device based on a spatial relationship between the gaze direction of the target user at the future moment and the first position where the display device is located; and adjusting the display parameter of the display device based on that a relative change occurs between the gaze coverage status corresponding to the current moment and a gaze coverage status corresponding to a historical moment, and the gaze coverage status corresponding to the future moment is same as the gaze coverage status corresponding to the current moment.

In an exemplary embodiment, the signal acquisition component 1110 includes a plurality of cameras 1111 disposed at different positions. The plurality of cameras 1111 disposed at different positions are configured to collect target images containing the same target user from different viewing angles. The processor 1120 is configured to execute the instructions stored in the memory to perform the following operations: for each of the viewing angles, determining a gaze direction vector of the same target user based on the target image collected from each of the viewing angles; and determining a gaze direction of the target user based on a plurality of gaze direction vectors determined for the plurality of viewing angles.

In an exemplary embodiment, the display device includes a display device disposed in front of a first row of seats, and a display device disposed behind the first row of seats and in front of a non-first row of seats.

In an exemplary embodiment, the signal acquisition component 1110 includes a first camera and a second camera. The first camera is configured to collect a target image containing a driver, and the second camera is configured to collect a target image containing a passenger.

In an exemplary embodiment, the signal acquisition component 1110 includes a first camera and a second camera. The first camera and the second camera are configured to collect target images containing a driver.

### Exemplary electronic device

FIG. 14 is a schematic diagram of a structure of an electronic device according to an exemplary embodiment of the present disclosure. The electronic device includes at least one processor 1210 and a memory 1220.

The processor 1210 may be a central processing unit (CPU) or another form of processing unit having a data processing capability and/or an instruction execution capability, and may control another component in the electronic device 1200 to perform a desired function.

The memory 1220 may include one or more computer program products, which may include various forms of computer-readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. One or more computer program instructions may be stored on the computer-readable storage medium. The processor 1210 may run the one or more computer program instructions to implement the method for controlling a display device according to various embodiments of the present disclosure that are described above and/or other desired functions.

In an example, the electronic device 1200 may further include an input device 1230 and an output device 1240. These components are interconnected through a bus system and/or other forms of connection mechanisms (not shown).

The input device 1230 may further include, for example, a keyboard or a mouse.

The output device 1240 may output various information to the outside, and may include, for example, a display, a speaker, a printer, a communication network, and a remote output device connected to the communication network.

Certainly, for simplicity, FIG. 14 shows only some of the components in the electronic device 1200 that are related to the present disclosure, and components such as a bus and an input/output interface are omitted. In addition, according to specific applications, the electronic device 1200 may also include any other appropriate components.

### Exemplary computer program product and computer-readable storage medium

In addition to the foregoing method and device, embodiments of the present disclosure may also relate to a computer program product including computer program instructions that, when executed by a processor, cause the processor to perform the steps, of the method for controlling a display device according to the embodiments of the present disclosure, that are described in the "Exemplary method" section of this specification.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer-readable storage medium, on which computer program instructions are stored. The computer program instructions, when executed by the processor, cause the processor to perform the steps of the method for controlling a display device according to the embodiments of the present disclosure, that are described in the "Exemplary method" section of this specification.

The computer-readable storage medium may be one readable medium or any combination of a plurality of readable media. The readable medium may be a readable signal medium or a readable storage medium. The readable storage medium may include, for example but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

Basic principles of the present disclosure are described above in combination with specific embodiments. However, it should be pointed out that advantages, superiorities, and effects mentioned in the present disclosure are merely examples rather than limitations, and it cannot be considered that these advantages, superiorities, and effects are necessary for the embodiments of the present disclosure. In addition, the specific details disclosed above are merely for examples and for ease of understanding, rather than for limitations. The details described above do not limit the present disclosure to necessarily adopting the foregoing specific details for implementation.

The block diagrams of the equipment, the apparatus, the device, and the system involved in the present disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and can be used interchangeably with "including but not limited to". The terms "or" and "and" used herein refer to the term "and/or", and can be used interchangeably with "and/or", unless the context clearly indicates otherwise. The term "such as" used herein refers to the phrase "such as but not limited to", and can be used interchangeably with "such as but not limited to".

It should be further pointed out that, various components or various steps in the apparatus, the device, and the methods of the present disclosure may be disassembled and/or recombined. These disassembling and/or recombinations shall be regarded as equivalent solutions of the present disclosure.

The foregoing description about the disclosed aspects is provided, so that the present disclosure can be arrived at or carried out by any person skilled in the art. Various modifications to these aspects are very obvious to a person skilled in the art. Moreover, general principles defined herein may be applicable to other aspects without departing from the scope of the present disclosure. Therefore, the present disclosure is not intended to be limited to the aspects illustrated herein, but to the widest scope consistent with the principles and novel features disclosed herein.

The foregoing descriptions are given for illustration and description. In addition, the description is not intended to limit the embodiments of the present disclosure to forms disclosed herein. Although a plurality of exemplary aspects and embodiments have been discussed above, a person skilled in the art may recognize certain variations, modifications, changes, additions, and sub-combinations thereof.

## Claims

1. A method for controlling a display device, comprising:
determining (100) a first position where the display device is located;
obtaining (200) a target image containing a target user, and determining a gaze direction of the target user based on the target image;
determining (300) a gaze coverage status corresponding to the display device based on a spatial relationship between the gaze direction of the target user and the first position where the display device is located; and
adjusting (400) a display parameter of the display device based on a change in the gaze coverage status.

2. The method for controlling a display device according to claim 1, wherein the determining (300) a gaze coverage status corresponding to the display device based on a spatial relationship between the gaze direction of the target user and the first position where the display device is located comprises:
based on the gaze direction of the target user pointing toward the first position where the display device is located, determining (310) that a gaze of the target user covers the display device; and
based on a gaze of at least one target user covering the display device, determining (320) the gaze coverage status corresponding to the display device as covered, and otherwise determining the gaze coverage status corresponding to the display device as uncovered.

3. The method for controlling a display device according to claim 1, wherein the adjusting (400) a display parameter of the display device comprises:
determining (410) a coverage degree of a visual field of the target user with respect to the display device based on the spatial relationship between the gaze direction of the target user and the first position where the display device is located; and
adjusting (420), based on the coverage degree, the display parameter of the display device to a target display parameter corresponding to the coverage degree.

4. The method for controlling a display device according to any one of claims 1 to 3, wherein the determining (300) a gaze coverage status corresponding to the display device based on a spatial relationship between the gaze direction of the target user and the first position where the display device is located comprises:
determining (330) a corresponding relationship between the display device and the target user based on the first position where the display device is located and a second position where the target user is located;
determining (340), based on the corresponding relationship, the spatial relationship between the first position where the display device is located and the gaze direction of the target user corresponding to the display device; and
determining (350) the gaze coverage status corresponding to the display device based on the spatial relationship between the first position where the display device is located and the gaze direction of the target user corresponding to the display device.

5. The method for controlling a display device according to any one of claims 1 to 3, wherein the determining (300) a gaze coverage status corresponding to the display device based on a spatial relationship between the gaze direction of the target user and the first position where the display device is located comprises:
determining (360), based on a rate of change and/or a change trajectory of the gaze direction of the target user, whether the gaze direction of the target user changes steadily; and
in a case where the gaze direction of the target user changes steadily, determining (370) the gaze coverage status corresponding to the display device based on the spatial relationship between the gaze direction of the target user and the first position where the display device is located.

6. The method for controlling a display device according to claim 5, wherein the in a case where the gaze direction of the target user changes steadily, determining (370) the gaze coverage status corresponding to the display device based on the spatial relationship between the gaze direction of the target user and the first position where the display device is located comprises:
in the case where the gaze direction of the target user changes steadily, predicting (371) a gaze direction of the target user at a future moment based on the rate of change and/or the change trajectory of the gaze direction of the target user;
determining (372) a gaze coverage status corresponding to the display device at a current moment based on the spatial relationship between the gaze direction of the target user and the first position where the display device is located; and
determining (373) a gaze coverage status corresponding to the display device at the future moment based on a spatial relationship between the gaze direction of the target user at the future moment and the first position where the display device is located; and
the adjusting (400) a display parameter of the display device based on a change in the gaze coverage status comprises:
adjusting (430) the display parameter of the display device based on that a relative change occurs between the gaze coverage status corresponding to the current moment and a gaze coverage status corresponding to a historical moment, and the gaze coverage status corresponding to the future moment is same as the gaze coverage status corresponding to the current moment.

7. The method for controlling a display device according to claim 1, wherein the obtaining (200) a target image containing a target user, and determining a gaze direction of the target user based on the target image comprises:
collecting (210) target images containing the same target user from different viewing angles by cameras disposed at different positions;
for each of the viewing angles, determining (220) a gaze direction vector of the same target user based on the target image collected from each of the viewing angles; and
determining (230) a gaze direction of the same target user based on a plurality of gaze direction vectors determined for the plurality of viewing angles.

8. The method for controlling a display device according to claim 1, wherein the display device comprises a display device disposed in front of a first row of seats, and a display device disposed behind the first row of seats and in front of a non-first row of seats.

9. An apparatus for controlling a display device, comprising:
a signal acquisition component (1110), comprising a camera (1111), wherein the camera (1111) is configured to obtain a target image containing a target user; and
one or more processors (1120), configured to: when running instructions stored in a memory, determine a first position where the display device is located; determine a gaze direction of the target user based on the target image; determine a gaze coverage status corresponding to the display device based on a spatial relationship between the gaze direction of the target user and the first position where the display device is located; and adjust a display parameter of the display device based on a change in the gaze coverage status.

10. The apparatus for controlling a display device according to claim 9, wherein the processor (1120) is configured to execute the instructions stored in the memory to perform the following operations: based on the gaze direction of the target user pointing toward the first position where the display device is located, determining that a gaze of the target user covers the display device; and based on a gaze of at least one target user covering the display device, determining the gaze coverage status corresponding to the display device as covered, and otherwise determining the gaze coverage status corresponding to the display device as uncovered.

11. The apparatus for controlling a display device according to claim 9, wherein the processor (1120) is configured to execute the instructions stored in the memory to perform the following operations: determining a coverage degree of a visual field of the target user with respect to the display device based on the spatial relationship between the gaze direction of the target user and the first position where the display device is located; and adjusting, based on the coverage degree, the display parameter of the display device to a target display parameter corresponding to the coverage degree.

12. The apparatus for controlling a display device according to any one of claims 9 to 11, wherein the processor (1120) is configured to execute the instructions stored in the memory to perform the following operations: determining a corresponding relationship between the display device and the target user based on the first position where the display device is located and a second position where the target user is located; determining, based on the corresponding relationship, the spatial relationship between the first position where the display device is located and the gaze direction of the target user corresponding to the display device; and determining the gaze coverage status corresponding to the display device based on the spatial relationship between the first position where the display device is located and the gaze direction of the target user corresponding to the display device.

13. The apparatus for controlling a display device according to any one of claims 9 to 11, wherein the processor (1120) is configured to execute the instructions stored in the memory to perform the following operations: determining, based on a rate of change and/or a change trajectory of the gaze direction of the target user, whether the gaze direction of the target user changes steadily; and in a case where the gaze direction of the target user changes steadily, determining the gaze coverage status corresponding to the display device based on the spatial relationship between the gaze direction of the target user and the first position where the display device is located.

14. An electronic device, comprising one or more processors (1210) and a memory (1220), wherein the memory (1220) stores computer instructions; and the computer instructions, when executed by the processor (1210), cause the processor (1210) to implement the method according to any one of claims 1 to 8.

15. A computer-readable storage medium, on which computer program instructions are stored, wherein the computer program instructions, when executed by a processor, cause the processor to implement the method according to any one of claims 1 to 8.
